Europäisches Patentamt

European Patent Office

Office européen des brevets

(11) Veröffentlichungsnummer: **0 289 754**
**A1**

(12) **EUROPÄISCHE PATENTANMELDUNG**

(21) Anmeldenummer: 88104130.5

(22) Anmeldetag: 16.03.88

(51) Int. Cl.⁴: **B60K 20/04 , F16F 1/38**

(30) Priorität: 29.04.87 DE 3714285

(43) Veröffentlichungstag der Anmeldung:
09.11.88 Patentblatt 88/45

(84) Benannte Vertragsstaaten:
**BE DE ES FR GB IT NL SE**

(71) Anmelder: **FORD-WERKE
AKTIENGESELLSCHAFT
Werk Köln-Niehl Henry-Ford-Strasse
Postfach 60 40 02
D-5000 Köln 60(DE)**

(84) **BE DE IT NL SE**

(71) Anmelder: **FORD MOTOR COMPANY LIMITED
Eagle Way
Brentwood Essex CM13 3BW(GB)**

(84) **GB**

(71) Anmelder: **FORD FRANCE SOCIETE ANONYME
344 Avenue Napoléon Bonaparte B.P. 307
F-92506 Rueil Malmaison Cedex(FR)**

(84) **FR**

(71) Anmelder: **FORD MOTOR COMPANY
DEARBORN
One Parklane Boulevard
Dearborn, MI 48126(US)**

(84) **ES**

(72) Erfinder: **Turner, Greame
Heckhaus 23
D-5203 Much(DE)**
Erfinder: **De Crouppé Guido
Königsberger Strasse 4
D-5020 Frechen 5(DE)**

(74) Vertreter: **Ritzkowsky, Harald, Dipl.-Ing.
Ford-Werke Aktiengesellschaft
Patentabteilung NH/DRP Henry-Ford-Strasse
D-5000 Köln 60(DE)**

(54) Wählhebelanordnung für ein Kraftfahrzeug-Automatik-Getriebe.

(57) Bei einer Wählhebelanordnung für ein Kraftfahrzeug-Automatik-Getriebe mit einem Wählhebel, der in einer ortsfesten Lageranordnung zum Wählen der Betriebsbereiche des Getriebes um einen Bolzen quer zur Fahrzeuglängsachse und zum Führen der Wählbewegung zusätzlich um eine Achse senkrecht zu dem Querbolzen verschwenkbar gelagert ist, ist der Wählhebel (5) auf seinem Querbolzen (11, 12/13) nur über ein in seinem Gelenkauge (7) angeordnetes, spezielles elastisches Lager (14) radial schwenkbar und seitlich neigbar abgestützt.

FIG. 2

## Wählhebelanordnung für ein Kraftfahrzeug-Automatik-Getriebe

Die Erfindung bezieht sich auf eine Wählhebelanordnung für ein Kraftfahrzeug-Automatik-Getriebe der im Oberbegriff des Patentanspruches 1 erläuterten Art.

Aus der DE-OS 35 14 946 ist eine Wählhebelanordnung für ein Kraftfahrzeug-Automatik-Getriebe bekannt, bei dem ein zweiarmiger Wählhebel in einer ortsfesten Lageranordnung zum Wählen der Betriebsbereiche des Getriebes, P, R, N, D, 3, 2 und 1, um einen Bolzen quer zur Fahrzeuglängsachse und zum Führen der Wählbewegung zusätzlich um eine Achse senkrecht zu dem Querbolzen verschwenkbar gelagert ist, wobei für diese beiden Bewegungsmöglichkeiten zwei getrennte Bolzen/Büchsen-Anordnungen vorgesehen sind und darüber hinaus ggfs. Federn vorgesehen sind, die den Wählhebel seitlich in Anlage an eine die Wählbewegung bestimmende Kulisse halten.

Die bekannte Wählhebelanordnung ist durch die beiden getrennten Bolzen/Büchsen-Anordnungen durch die für das Halten der Bolzen erforderlichen Konsolen und dergleichen verhältnismäßig aufwendig in der Herstellung und der Montage und die die seitliche Anlage bewirkende Feder muß an entsprechenden Konsolen und dergleichen eingehängt oder angeordnet werden.

Die Aufgabe der Erfindung ist es, eine Wählhebelanordnung der im Oberbegriff des Patentanspruches 1 erläuterten Art derart zu verbessern, daß der Aufwand für die Herstellung und für die Montage wesentlich vereinfacht wird und daß darüber hinaus noch eine weitere erwünschte Dämpfung von auf den Wählhebel übertragenen Vibrationen erzielt wird.

Gemäß der Erfindung wird diese Aufgabe gelöst, indem eine Wählhebelanordnung gemäß dem Oberbegriff des Patentanspruches 1 die im Kennzeichenteil des Patentanspruches 1 aufgezeigten Merkmale aufweist.

In den Ansprüchen 2 bis 4 sind weitere Einzelheiten der Erfindung erläutert.

Dadurch, daß der Wählhebel auf seinem Querbolzen nur über ein in seinem Gelenkauge angeordnetes elastisches Lager radial schwenkbar und seitlich neigbar abgestützt ist, können für den Wählhebel die beiden erforderlichen Bewegungsbereiche auf einfachste Weise bereitgestellt werden, wobei zusätzlich noch eine erwünschte Dämpfung von auf den Wählhebel einwirkenden Schwingungen erzielt wird.

Dadurch, daß das elastische Lager ein Metall-Gummi bzw. Metall-Kunststoff-Büchsenlager ist, das aus einer metallischen Innenhülse, einem mit unregelmäßigen Ausnehmungen versehenen Gummi-oder Kunststoff-Zylinderteil und einer metallischen Außenhülse besteht, können die erwünschten Bewegungsbereiche in der erforderlichen unterschiedlichen Kraftauslegung bereitgestellt werden.

Aus der DE-OS 35 19 868 sind zwar elastische Lager dieser grundsätzlichen Bauart für die Lagerung eines Fahrerhauses eines Lastkraftwagens bekannt, das elastische Lager gemäß der Erfindung unterscheidet sich hiervon jedoch in einem wesentlichen Punkt. Das bekannte elastische Lager weist eine festgelegte Innenhülse auf, die mit dem Gummi-bzw. Kunststoff-Zylinderteil durch Vulkanisieren verbunden ist und dementsprechend wären bei einem radialen Ver schwenken der Außenhülse gegenüber der Innenhülse erhebliche Kräfte aufzubringen, die für eine Wählbewegung an einem Wählhebel unerwünscht sind, wohingegen das erfindungsgemäße Lager eine Innenhülse mit Gleiteigenschaften aufweist.

Die Erfindung wird anhand eines in den beiliegenden Zeichnungen gezeigten Ausführungsbeispieles näher erläutert. Es zeigt:

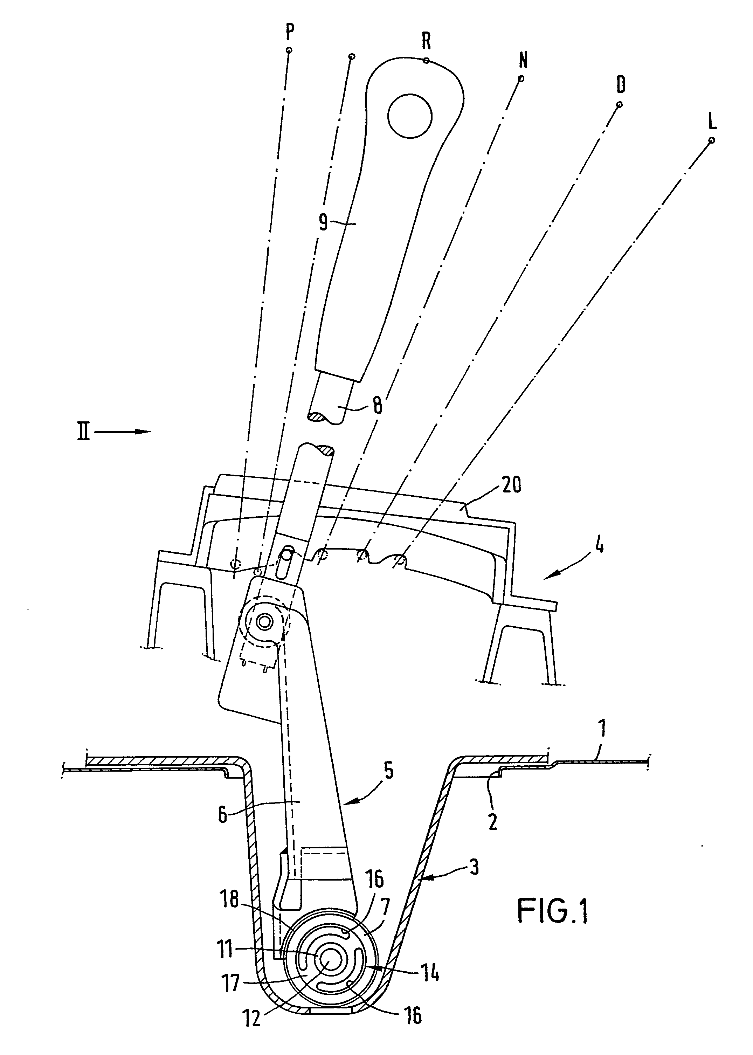

Fig. 1 eine Seitenansicht einer Wählhebelanordnung für ein Kraftfahrzeug-Automatikgetriebe gemäß der Erfindung;

Fig. 2 eine Ansicht der Wählhebelanordnung in Fig. 1 in Richtung des Pfeiles II in Fig. 1 und

Fig. 3 eine Ansicht auf die die Wählbewegung führende Kulisse für den Wählhebel in Richtung des Pfeiles III in Fig. 2.

Am Bodenblech 1 ist im Bereich einer Öffnung 2 eine Konsole 3 für eine Wählhebelanordnung 4 befestigt, die als vormontierte Baugruppe in das Fahrzeug eingebaut werden kann und über eine entsprechende Gestänge-oder Bowdenzugverbindung auf die Wählventilanordnung des Automatik-Getriebes einwirken kann.

Ein Wählhebel 5 besteht im wesentlichen aus einem unteren Wählhebelteil 6 mit einem Gelenkauge 7 und einem oberen Hebelteil 8 mit einem Handgriff 9.

Der Wählhebel 5 ist in einer ortsfesten Lageranordnung 10 um eine Achse quer zur Fahrzeuglängsachse verschwenkbar, damit er die in Fahrzeuglängsrichtung verlaufende Wählbewegung zum Wählen der Betriebsbereiche des Getriebes P, R, N, D und L ausführen kann.

Die ortsfeste Lageranordnung besteht aus einer Hülse 11, die über eine Befestigungsschraube 12 und eine Mutter 13 in einem U-förmige Seitenwände aufweisenden Bereich der Konsole 3 festgeklemmt ist.

Bisher war der untere Hebelteil 6 über sein Lagerauge 7 eventuell nur über schmale zwischengeschaltete Kunststoffbüchsen unmittelbar auf dieser Hülse oder einem entsprechenden Bolzen drehbar gelagert und eine erwünschte seitliche Schwenkbarkeit des oberen Hebelteiles 8 wurde durch eine weitere Lageranordnung im Bereich zwischen dem unteren Hebelteil 6 und dem oberen Hebelteil 8 ermöglicht.

Diese weitere Lageranordnung wird gemäß der Erfindung vermieden, indem der untere Hebelteil 6 über sein Gelenkauge 7 nur über ein in seinem Gelenkauge 7 angeordnetes spezielles elastisches Lager 14 drehbar abgestützt ist.

Das spezielle elastische Lager 14 besteht aus einem Metallgummi bzw. Metall-Kunststoff-Büchsenlager, das im wesentlichen aus einer metallischen Innenhülse 15, einem unregelmäßige Ausnehmungen 16 aufweisenden Gummi-oder Kunststoff-Zylinderteil 17 und einer metallischen Außenhülse 18 besteht. Die metallische Innenhülse 15 ist hierbei auch an ihrer Innenseite mit dem Gummi-oder Kunststoffmaterial überzogen und gleitet radial schwenkbar auf der Hülse 11 wohingegen die metallische Außenhülse 18 außen frei von Kunststoffmaterial ist und durch Einpressen einfach und sicher im Gelenkauge 7 des unteren Hebelteiles 6 montiert und festgelegt wird.

Das Gummi-bzw. Kunststoffmaterial des Büchsenlagers 14 ist so gewählt, daß insbesondere am Innenumfang des elastischen Lagers 16, der mit der festgelegten Hülse 11 zusammenwirkt, günstige Gleiteigenschaften erzielt werden, die eine leichte Verschwenkbarkeit in Fahrzeuglängsrichtung sicherstellen.

Durch die Auswahl der Lage der bogenförmigen Ausnehmungen 16 im Zylinderteil 17 in der Weise, daß im Bereich der Mittelebene des elastischen Lagers 14 ein Steg 19 verbleibt, kann die seitliche Neigungsbewegung des Wählhebels 5 in Fahrzeugquerrichtung entsprechend den gewünschten Erfordernissen festgelegt werden.

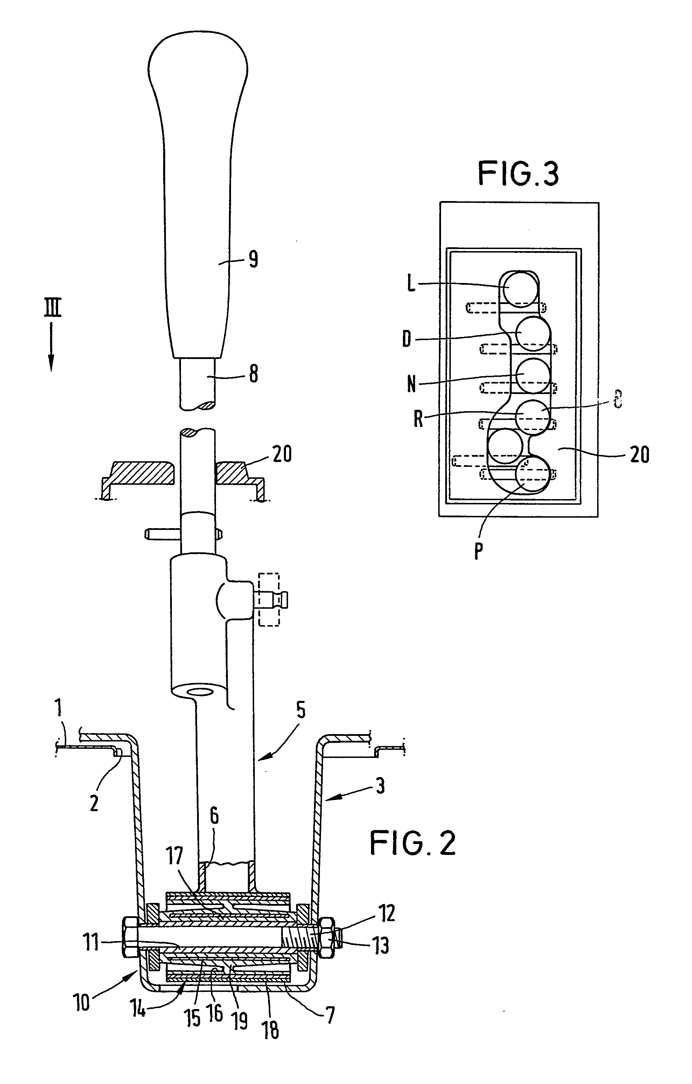

Wie insbesondere aus Fig. 3 zu ersehen ist, wird die Wählbewegung des Wählhebels 5 am oberen Hebelteil 8 durch eine Kulisse 20 geführt an der der obere Hebelteil 8 zur Sicherstellung einer guten Führung und zur Vermeidung von Klappergeräuschen stets unter einer leichten Vorspannung seitlich anliegen soll. Die Ausbildung und Montage des speziellen elastischen Lagers 14 erfolgt daher in der Weise, daß es in Einbaulage eine leichte Winkelvorspannung auf den Wählhebel 5 senkrecht zur Kulisse 20 ausübt. Darüber hinaus sorgt das spezielle elastische Lager 14 durch die bogenförmigen Ausnehmungen 16 dafür, daß eine entgegengesetzte seitliche Neigungsbewegung um einen größeren Winkelbereich möglich ist, um eine durch die Kulisse erzwungene Hebelbewegung zu gestatten, die für eine erwünschte Rast-oder Sicherungsfunktion beim Einlegen der Betriebsbereiche vorgesehen ist.

Durch die erfindungsgemäße Lageanordnung wird der Fertigungs-und Montageaufwand für einen Wählhebel eines Kraftfahrzeug-Automatik-Getriebes erheblich verringert und durch die entsprechende Auslegung und Anordnung des speziellen elastischen Lagers kann dieses auch wirksam auf den Wählhebel einwirkende Schwingungen dämpfen.

## Ansprüche

1. Wählhebelanordnung für ein Kraftfahrzeug-Automatik-Getriebe mit einem Wählhebel, der in einer ortsfesten Lageranordnung zum Wählen der Betriebsbereiche des Getriebes um einen Bolzen quer zur Fahrzeuglängsachse und zum Führen der Wählbewegung zusätzlich um eine Achse senkrecht zu dem Querbolzen verschwenkbar gelagert ist, **dadurch gekennzeichnet**, daß der Wählhebel (5) auf seinem Querbolzen (11, 12/13) nur über ein in seinem Gelenkauge (7) angeordnetes spezielles elastisches Lager (14) radial schwenkbar und seitlich neigbar abgestützt ist.

2. Wählhebelanordnung nach Anspruch 1, **dadurch gekennzeichnet**, daß das spezielle elastische Lager (14) ein Metall-Gummi bzw. ein Metall-Kunststoff-Büchsenlager ist, das im wesentlichen aus einer metallischen Innenhülse (15), einem mit unregelmäßigen Ausnehmungen (16) versehenen Gummi oder Kunststoff-Zylinderteil (17) und einer metallischen Außenhülse (18) besteht.

3. Wählhebelanordnung nach den Ansprüchen 1 und 2, **dadurch gekennzeichnet**, daß das spezielle elastische Lager (14) in seinem Gummi-oder Kunststoff-Zylinderteil (17) bogenförmige Ausnehmungen (16) aufweist, die sich axial nach innen erstrecken, so daß in der Mittelebene des Büchsenlagers im wesentlichen lediglich ein Steg (19) verbleibt.

4. Wählhebelanordnung nach den Ansprüchen 1 bis 3, **dadurch gekennzeichnet**, daß das spezielle elastische Lager (14) im Gelenkauge (7) des Wählhebels (5) derart montiert wird, daß es im Einbauzustand am Querbolzen (11, 12/13) auf den Wählhebel (5) eine seitliche Vorspannung ausübt.

FIG.1

FIG.3

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 348 077  (CITROEN) * Seite 1, Zeilen 12-21; Seite 7, Zeile 38 - Seite 8, Zeile 3; Figur 3 * | 1,4 | B 60 K   20/04 F 16 F    1/38 |
| Y | --- | 2,3 | |
| Y | GB-A-  863 720  (METALASTIK LTD) * Das ganze Dokument * --- | 2,3 | |
| A,D | DE-A-3 519 868  (JÖRN) * Zusammenfassung; Figur 1 * ----- | 2,3 | |

**RECHERCHIERTE SACHGEBIETE (Int. Cl.4)**

F 16 H
B 60 K
G 05 G
F 16 F

Der vorliegende Recherchenbericht wurde für alle Patentansprüche erstellt

| Recherchenort | Abschlußdatum der Recherche | Prüfer |
|---|---|---|
| DEN HAAG | 22-08-1988 | MENDE H. |